Europäisches Patentamt

European Patent Office

Office européen des brevets

(19)

(11) Numéro de publication: **0 205 714**
**B1**

(12) # FASCICULE DE BREVET EUROPÉEN

(45) Date de publication du fascicule du brevet:
27.12.89

(21) Numéro de dépôt: **85401702.7**

(22) Date de dépôt: **02.09.85**

(51) Int. Cl.⁴: **B 29 C 53/56,** B 31 C 1/00,
D 04 H 1/00 //
F16L59/02

(54) Procede et dispositif de fabrication de coquilles en fibres minerales.

(30) Priorité: **14.06.85 FR 8509059**

(43) Date de publication de la demande:
**30.12.86 Bulletin 86/52**

(45) Mention de la délivrance du brevet:
**27.12.89 Bulletin 89/52**

(84) Etats contractants désignés:
**AT BE CH DE FR GB IT LI LU NL SE**

(56) Documents cité:
**DE-B-1 062 606
DE-C-596 181
DE-C-605 793
FR-A-1 224 072
FR-A-1 345 096
FR-A-1 461 528
FR-A-2 278 485
GB-A-128 700
US-A-3 723 245**

(73) Titulaire: **ISOVER SAINT- GOBAIN, Les Miroirs 18,
avenue d'Alsace, F-92400 Courbevoie (FR)**

(72) Inventeur: **Bichot, Bernard, Rue Henri Ayrald
Ronquerolles, F-60600 Clermont (FR)**
Inventeur: **Louis, Bernard, 5 rue Fontaire Saint-
Maur Louveaucourt Bailleval, F-60140 Liancourt
(FR)**

(74) Mandataire: **Le Vaguerese, Sylvain Jacques,
SAINT- GOBAIN RECHERCHE 39, quai Lucien
Lefranc, F-93304 Aubervilliers Cedex (FR)**

LIBER, STOCKHOLM 1989

EP 0 205 714 B1

## Description

La présente invention concerne un procédé de fabrication de coquilles isolantes formées de fibres minérales agglomérées par un liant, du type énoncé dans le préambule de la revendication 1. Elle concerne également un dispositif pour la mise en oeuvre dudit procédé.

Selon un procédé de ce genre, on découpe en tronçons de longueurs déterminées un feutre de fibres minérales imprégnées d'un liant constitué par une résine polymérisable par exemple du type mélanine-formaldéhyde, phényl-formaldéhyde ou phénol-urée. Chaque tronçon de feutre est enroulé autour d'un mandrin tournant alors que débute la polymérisation du liant qui est ensuite achevée dans une enceinte chauffée.

Un tel procédé est notamment connu du brevet français 2 278 485 auquel il est fait ici plus spécialement référence. Ce procédé se caractérise essentiellement par le fait que le mandrin tournant autour duquel est enroulé le tronçon de feutre de fibres minérales est chauffé. Ce chauffage du mandrin favorise l'accrochage de la première spire de feutre. La température est choisie de façon que se forme pendant le temps d'enroulement une surface interne de la coquille durcie par la polymérisation du liant au voisinage du mandrin. Ainsi, dès la fin de l'enroulement, la coquille peut être séparée de son mandrin et être transférée à un dispositif qui assure le lissage et le durcissement de la surface extérieure de la coquille. Celle-ci présente à ce stade des surfaces interne et externe durcies alors qu'en dehors de ces surfaces interne et externe la polymérisation du liant reste incomplète. Elle est ensuite achevée d'une manière homogène dans toute l'épaisseur de la coquille dans une enceinte chauffée.

Egalement suivant le brevet français 2 278 485, l'enroulement du feutre autour du mandrin tournant est effectué en maintenant la vitesse du mandrin, conduisant à une vitesse tangentielle accélérée. De ce fait, l'épaisseur de la coquille en formation s'accroît avec une vitesse constante.

Un tel procédé de mise en oeuvre relativement simple, convient parfaitement pour la production de coquilles de petits diamètres intérieur et extérieur, pour lesquelles seulement de faibles longueurs de feutre de fibres minérales doivent être enroulées, inférieures par exemple à 6 mètres. L'alimentation du dispositif d'enroulement doit s'effectuer à vitesse accélérée, mais cependant, il est impossible de trop augmenter la vitesse d'alimentation en feutre de fibres minérales sans risquer un déchirement du feutre, fragilisé de plus par le fait que les fibres minérales ne sont pas encore liées entre elles. La vitesse maxima d'alimentation atteinte en fin d'enroulement est fonction du diamètre extérieur de la coquille et de la vitesse de rotation du mandrin, et doit être inférieure à la vitesse au delà de laquelle l'on risque de déchirer le feutre. Ceci impose une vitesse maxima de rotation du mandrin, inversement proportionnelle au diamètre extérieur de la coquille conformée en fin d'enroulement. Cette limitation devient particulièrement contraignante pour des coquilles de diamètre extérieur important. Ainsi, à titre d'exemple, si on admet une vitesse d'alimentation limite de 50 mètres par minute, pour une coquille de 400 mm de diamètre extérieur, le mandrin doit avoir une vitesse constante de rotation inférieure à 40 tours par minute. Avec des spires d'une épaisseur moyenne d'environ 0,3 mm, on atteint un temps d'enroulement supérieur à 8 minutes pour une coquille de 100 mm d'épaisseur totale. La cadence de production selon cet exemple serait donc très faible.

Selon une autre caractéristique importante du brevet FR 2 278 485, pendant toute la durée de l'enroulement des organes de pressage doivent au contact de la coquille en formation. Ces organes de pressage sont constitués par exemple par trois contre-rouleaux disposés autour du mandrin tournant chauffé. S'écartant simultanément de l'axe du mandrin au fur et à mesure de la formation de la coquille, ces contre-rouleaux assurent d'une part la régularité de l'enroulement et d'autre part la cohésion de la coquille. En effet, ces contre-rouleaux constituent des points de contact réguliers avec la coquille en formation, qui définissent pendant tout le temps d'enroulement la forme générale de la coquille. De plus de par la compression exercée, les contre-rouleaux évitent toute individualisation des spires de feutre enroulées.

En pratique, trois contre-rouleaux donnent une parfaite satisfaction avec des "petites" coquilles, soient des coquilles dont le diamètre intérieur est compris entre 12 et 100 mm et dont le diamètre extérieur est inférieur à 200 mm. Lorsque l'on s'écarte de ces valeurs limites afin de conformer avec la même installation par exemple des coquilles dont le diamètre extérieur atteint 500 mm, trois points de contact s'avèrent insuffisants, pour définir correctement la forme de la coquille et surtout les contre-rouleaux n'assurent plus la cohésion recherchée. En effet, celle-ci est obtenue par l'écrasement de la coquille entre les contre-rouleaux, donc la compression exercée est d'autant plus importante qu'une grande part de la surface extérieure de la coquille est en contact avec les contre-rouleaux ou en d'autres termes que la surface de chaque contre-rouleau en contact avec la coquille est plus importante. Or cette surface de contact est limitée du fait que le diamètre des contre-rouleaux ne peut dépasser une valeur telle que les contre-rouleaux soient à la fois tangents entre eux et du mandrin tournant chauffé qui lui détermine la valeur du diamètre intérieur de la coquille. Il serait bien sur possible d'augmenter le nombre des contre-rouleaux mais leur diamètre devrait alors être réduit pour les mêmes raisons d'encombrement stérique. De ce fait une installation bien adaptée à la production de coquilles de petits diamètres intérieurs fournirait des coquilles de moyen diamètre intérieur et/ou d'épaisseur moyenne de mauvaise qualité alors que réciproquement une installation bien adaptée à la production de coquilles de moyen diamètre intérieur ne permettrait pas la production de coquilles de petit diamètre intérieur, car aucune compression ne serait alors exercée sur les premières spires enroulées.

La mise en oeuvre de ce procédé de l'art pour la production de coquilles d'épaisseur moyenne se heurte également à une difficulté supplémentaire liée à la compressibilité du produit. En effet, selon ce procédé, les contre-rouleaux sont écartés progressivement de l'axe du mandrin tournant de sorte que pendant toute la phase d'enroulement, une force constante est exercée sur le feutre de fibres minérales par les contre-rouleaux. Par suite, les premières spires enroulées, dont la surface externe reste peu éloignée de celle, parfaitement rigide, du mandrin tournant, sont plus comprimées que les dernières spires qui sont elles séparées du mandrin rigide par une épaisseur sensible de feutre compressible. Du fait de l'élasticité partielle du feutre de fibres minérales, et de cette différence de compression, la reprise d'épaisseur de la coquille est plus forte en fin d'enroulement; il en résulte une coquille conformée dont le diamètre extérieur est imparfaitement contrôlé et supérieur au diamètre théorique attendu.

Il est connu du document de brevet DE-A-596 181 une machine d'obtention de gaine en carton ou papier par enroulement d'une bande encollée. Cette machine comporte un rouleau presseur qui applique une partie de la bande sur un rouleau d'encollage et une autre partie sur un mandrin autour duquel s'effectue l'enroulement de la gaine. Pour éviter que le mandrin soit contaminé par la colle liant entre elles les différentes spires constitutives de la gaine, ce document enseigne de n'appliquer le rouleau presseur qu'à la fin de l'enroulement de la première spire. Ce document ne s'applique toutefois pas à un matériau compressible tel une bande de fibres de verre et l'intervention du rouleau presseur est totalement indépendante de l'épaisseur de la gaine.

La présente invention a pour but de remédier à l'inconvénient du procédé connu, décrit dans le document FR-A-2 278 485 et de proposer un procédé donnant satisfaction aussi bien pour des petites coquilles dont le diamètre extérieur est, par exemple, inférieure à 200 mm que pour des grandes coquilles dont le diamètre extérieur atteint, par exemple, 500 mm.

Pour atteindre ce but, le procédé selon l'invention est *caractérisé* en ce que, lorsque le diamètre extérieur de la coquille en cours de conformation atteint une valeur donnée, on amène au contact de la surface externe de la coquille des organes de passage auxiliaires constitués par des contre-rouleaux s'écartant de l'axe du mandarin avec la même vitesse instantanée que celle des contre-rouleaux principaux, la pression exercée par les contre-rouleaux principaux et éventuellement auxiliaires étant augmentée au fur et à mesure de la progression de l'enroulement.

Suivant que le diamètre du mandarin est ou non supérieur à cette valeur en question, les contre-rouleaux auxiliaires interviennent ou non dès le début de l'enroulement. Le choix de la dimension pour laquelle les contre-rouleaux auxiliaires interviennent est fonction des valeurs extrêmes des diamètres interne et externe des coquilles aptes à être conformées avec le dispositif d'enroulement. De toute façon ce choix est toujours le fruit d'un compromis, le maximum d'efficacité des contre-rouleaux étant obtenu au début de leur intervention.

Par exemple pour la production de coquilles isolantas dont le diamètre intérieur peut varier selon les besoins entre 12 et 400 mm et dont le diamètre extérieur atteint jusqu'à 500 mm, on dispose avantageusement de trois contre-rouleaux principaux qui interviennent seuls, tant que de diamètre extérieur de la coquille reste inférieur à par exemple 200 mm, et de trois contre-rouleaux auxiliaires qui interviennent en complément dès que le diamètre extérieur de la coquille atteint cette valeur de 200 mm, soit du fait de l'épaisseur de feutre enroulé ou simplement du fait que le mandrin tournant choisi a lui-même un diamètre supérieur ou égal à 200 mm. Ces contre-rouleaux auxiliaires sont placés au contact du feutre et commandés de telle façon qu'ils s'écartent de l'axe du mandrin tournant chauffé avec la même vitesse instantanée que celle des contre-rouleaux principaux, exerçant ainsi une pression identique sur le feutre enroulé.

De préférence, selon l'invention, la pression exercée par les contre-rouleaux principaux et éventuellement auxiliaires est augmentée au fur et à mesure de la progression de l'enroulement par une décroissance de la vitesse d'écartement, ce qui permet d'obtenir une compression sensiblement identique pour toutes les spires de feutre enroulées.

Suivant une caractéristique préférée de l'invention, la décroissance de la vitesse d'écartement des contre-rouleaux s'effectue avec une décélération constante; la vitesse d'écartement en fin d'enroulement étant choisie égale à la vitesse d'accroissement du diamètre d'une coquille parfaite, cette vitesse théorique étant calculée pour une valeur de diamètre égale au diamètre extérieur de la coquille conformée obtenue par l'enroulement d'une bande de matériau incompressible.

D'une manière également préférée, le feutre de fibres minérales est enroulé à vitesse tangentielle sensiblement constante ce qui implique que la vitesse de rotation du mandrin soit fonction à tout instant du diamètre extérieur de la coquille en formation. Selon une forme de réalisation particulièrement simple pour sa mise en oeuvre, on choisit de faire décroître linéairement la vitesse de rotation du mandrin, les vitesses de rotation en début et en fin d'enroulement, calculées dans l'hypothèse d'un enroulement à vitesse tangentielle constante étant prises comme référence.

Il est à noter que le fait d'opter pour une décroissance linéaire de la vitesse du mandrin tournant a pour effet d'entraîner un léger étirement du feutre enroulé qui est ainsi comprimé autour du mandrin. Ceci conduit à une densité plus grande de la coquille conformée. D'une part cet accroissement de la densité du produit réduit l'encombrement stérique du produit ce qui facilite sa mise en place autour de tuyauteries, d'autre part les coquilles pour isolation thermique formées de fibres de verre ont généralement une densité voisine de 60 kg/m³. Or le coefficient de conductivité thermique $\lambda$ peut s'exprimer en fonction de la densité $\rho$ du produit de la manière suivante:

$\lambda = A + B\rho + C/\rho$, où

A, B et C sont des variables dépendant essentiellement de la température et de la nature du produit. Dans le cas des fibres de verre, la conductivité thermique reste minimum pour une densité autour de 60 - 90 kg/m3. Donc une légère variation de la densité n'a pas ici d'influence sérieuse sur le coefficient de conductivité thermique, c'est à dire sur le pouvoir isolant de la coquille conformée.

L'invention a également pour but de réaliser un dispositif d'enroulement d'un feutre de fibres minérales autour d'un mandrin tournant chauffé, capable de produire des coquilles dont les diamètres intérieur et extérieur peuvent varier dans des limites importantes tout en présentant une bonne régularité de conformation, en particulier des coquilles dont le diamètre intérieur varie entre 12 et 400 mm, alors que le diamètre extérieur reste inférieur à 500 mm.

Le dispositif selon l'invention pour la mise en oeuvre du procédé ci-dessus défini, est *caractérisé* en ce qu'un contre-rouleau sur deux ou contre-rouleau auxiliaire est doté d'un dispositif permettant de ne le faire venir au contact de la coquille en cours de formation que lorsque le diamètre extérieur de celle-ci attient une vlaeur donnée.

Le dispositif d'enroulement selon l'invention permet une large automatisation et ne nécessite qu'un minimum d'opérations pour le passage d'un type de coquilles donné à un autre.

D'autres particularités et avantages de l'invention apparaîtront dans la description qui suit d'un mode de réalisation, description effectuée en référence aux dessins annexés qui représentent:

figure 1: une vue schématique d'un dispositif de fabrication de coquilles isolantes comportant un dispositif d'enroulement selon l'invention,

figure 2: une vue schématique d'un dispositif d'enroulement selon l'invention en position d'éjection,

figure 3: une vue schématique du dispositif d'enroulement de la figure 2 avec les contre-rouleaux principaux utilisés alors que les contre-rouleaux auxiliaires sont en position éclipsée,

figure 4: une vue schématique du dispositif d'enroulement de la figure 2 avec les contre-rouleaux principaux et auxiliaires utilisés.

figure 5a: une vue schématique de l'évolution au cours de l'enroulement de la valeur du diamètre extérieur de la coquille, en formation, pour 3 types A, B, et C de coquilles isolantes,

figure 5b: une vue schématique de l'évolution au cours de l'enroulement de la courbe de vitesse instantanée du mandrin tournant chauffé, correspondant aux coquilles A, B, et C,

figure 6: une vue schématique de l'évolution au cours de l'enroulement de la courbe de vitesse d'écartement instantanée des contre-rouleaux, pour les coquilles A, B, et C.

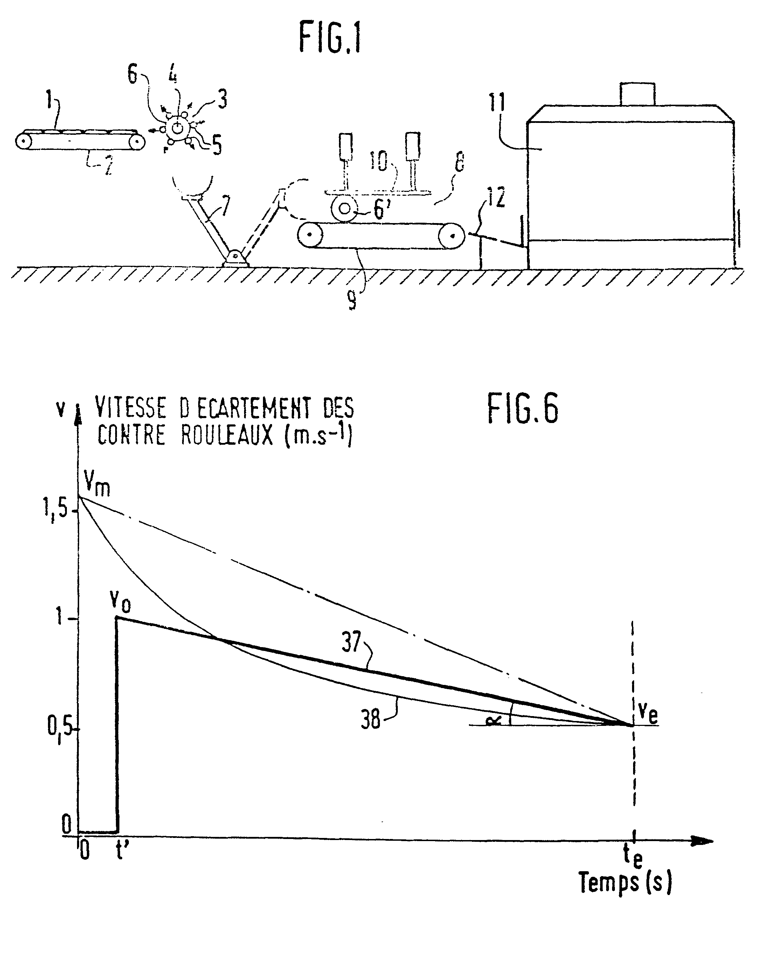

On a représenté à la figure 1 les principaux éléments constitutifs d'un dispositif de formation de coquilles isolantes formées de fibres minérales notamment en verre maintenues par un liant. Chaque coquille est à partir d'un tronçon 1 de feutre de fibres minérales, notamment en verre, dans lequel est dispersé un liant à l'état non polymérisé. Le tronçon est obtenu par exemple après déchirement du feutre provoqué par une brusque traction sur celui-ci. Le tronçon 1 est conduit par un convoyeur d'alimentation 2 jusqu'à un dispositif d'en roulement 3. Pour éviter toute détérioration du feutre encore très fragile étant donné que les fibres ne sont pas fixées les unes aux autres par le liant polymérisé, le convoyeur d'alimentation 2 est de préférence à tapis en polychlourure de vinyle. De plus, conformément à un mode de réalisation préféré de l'invention, la vitesse d'alimentation est choisie constante; de la sorte on évite les glissements des tronçons de feutre contre le convoyeur qui peuvent engendrer des pertes de fibres. De plus, cette vitesse d'alimentation peut être choisie relativement proche de la vitesse de production du feutre de fibres minérales.

Le dispositif d'enroulement 3 comporte essentiellement un mandrin tournant 4 et des contre-rouleaux 5 qui s'écartent de l'axe du mandrin au fur et à mesure que le feutre 1 s'enroule. Ces contre-rouleaux 5 exercent une pression sur la coquille en formation. Ils assurent ainsi une bonne cohésion de celle-ci tout en interdisant la formation de plis.

Le mandrin tournant est chauffé à une température telle que la surface interne de la coquille soit durcie par la polymérisation du liant au voisinage du mandrin. A titre d'exemple, pour des liants usuels à base de résines formo-phénoliques, on choisit de chauffer le mandrin à une température constante de l'ordre de 350 - 400°C, quelque soit l'épaisseur de la coquille conformée. Ceci permet d'obtenir une épaisseur polymérisée d'autant plus importante que l'épaisseur de la coquille conformée est grande. Ainsi indépendamment de sa dimension la coquille présente une certaine rigidité qui facilite son éjection hors du mandrin. Dès la fin de l'enroulement, la coquille conformée 6 est désolidarisée du mandrin 4 et transférée par le dispositif à bras pivotant 7 jus-qu'au dispositif de lissage 8 qui permet la formation d'une " peau " sur la surface extérieure de la coquille 6'. Le dispositif de lissage 8 comporte un convoyeur à charnières 9 et une plaque lisseuse 10 pouvant être montée ou baissée pour s'adapter aux différents diamètres externes des coquilles, et équipée de résistances électriques. Sa température est réglée à environ 400°C, pour le type de liants considérés à titre d'exemple.

La coquille 6' est entraînée en rotation par contact de sa génératrice supérieure sur la plaque lisseuse 10 et de sa génératrice inférieure sur le convoyeur 9. Outre la formation d'une "peau", ce dispositif de lissage 8 permet aussi une rectification éventuelle de la coquille conformée.

Après lissage, la coquille, présentant des surfaces interne et externe durcies alors que le liant n'a pas encore totalement polymérisé en dehors du voisinage de ces surfaces périphériques, est conduite à une étuve de polymérisation 11 après être passée par une table de réception 12. Pour cette étuve de polymérisation, on se référera plus spécialement aux publications de brevets français 2 325 007 et 2 548 586, cette dernière décrivant une étuve à micro-ondes dont l'emploi est ici préféré.

Les coquilles polymérisées sont ensuite conduites à un dispositif de refroidissement, puis mises en longueur et enfin découpées dans le sens longitudinal afin de permettre leur mise en place autour de tuyauteries.

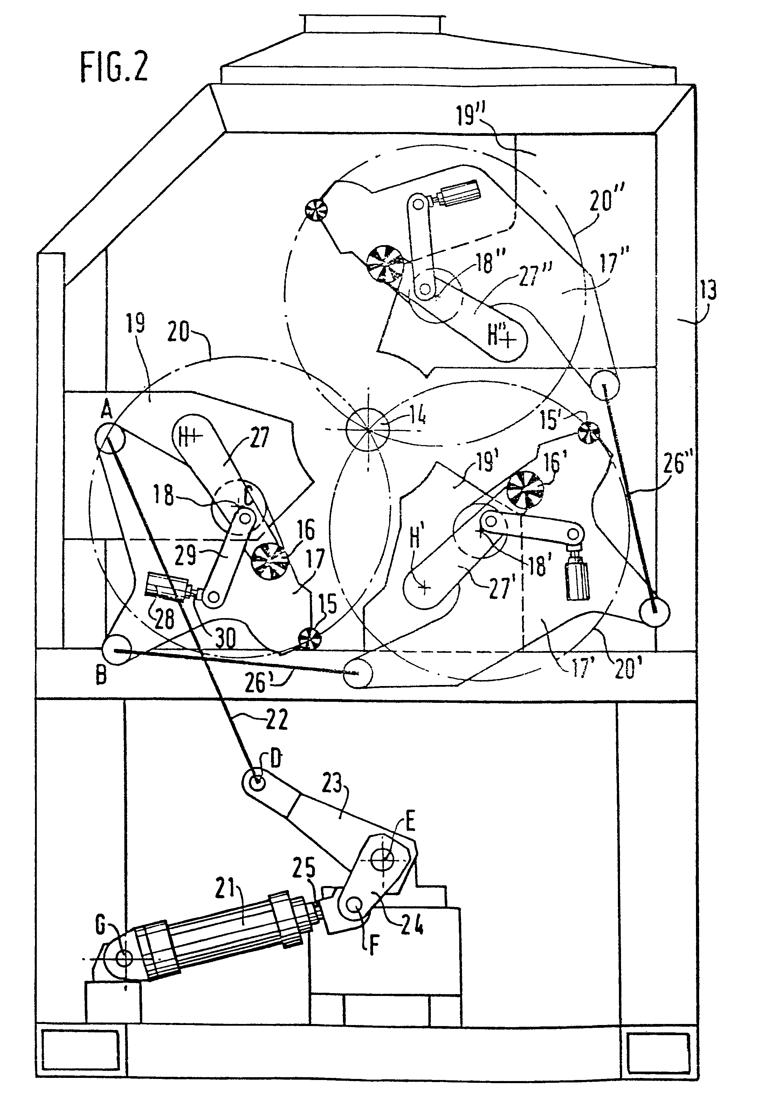

La figure 2 représente plus en détail un mode de réalisation d'un dispositif d'enroulement selon l'invention. Celui-ci comporte un bâti 13, mécano soudé qui supporte les différentes pièces de l'enrouleuse et leur dispositif de déplacement.

Le mandrin tournant 14 est composé de deux demi-mandrins ici non représentés, fabriqués par exemple en acier inox, entraînés solidairement en rotation par un moteur de préférence à courant continu ou encore entraîné chacun en rotation, les deux moteurs étant alors reliés par un dispositif de synchronisation l'un par rapport à l'autre.

Ces deux demi-mandrins peuvent s'écarter pour permettre l'éjection d'une coquille conformée. Pour cela, ils sont dotés chacun d'un dispositif d'entraînement en translation, constitué par un vérin hydraulique qui commande le déplacement du support d'un demi-mandrin et de son moteur.

Le chauffage du mandrin est assuré par un faisceau de résistances électriques réparties dans le mandrin en fonction de son diamètre.

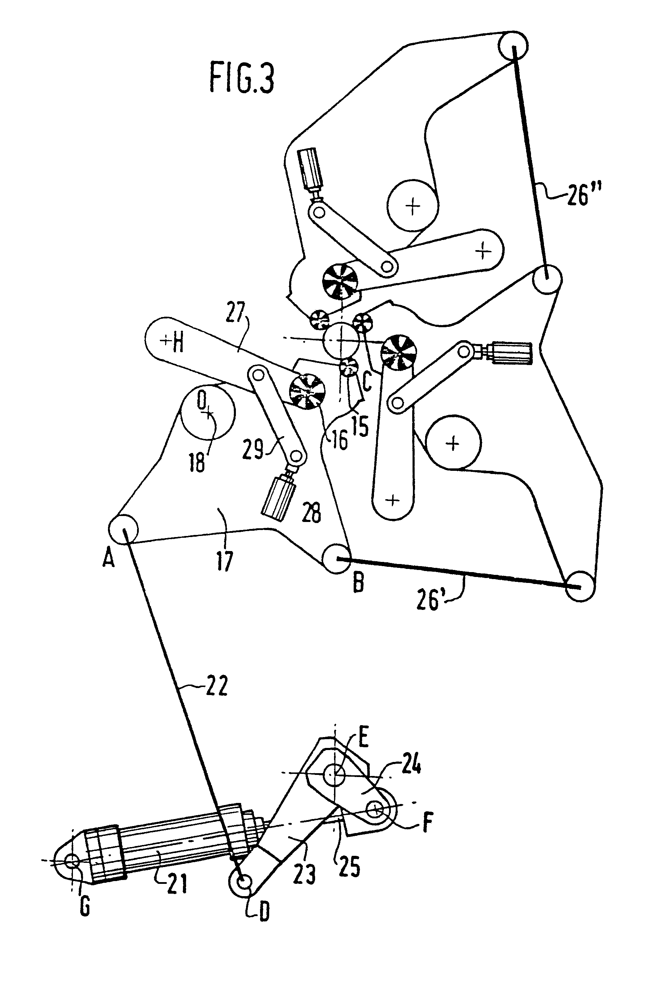

Alors que le feutre s'enroule autour du mandrin, des contre-rouleaux 15, 15', 15", 16, 16', 16" exercent une légère pression sur la surface extérieure de la coquille. Comme le montre notamment les figures 2 et 3, le contre-rouleau 15 est monté sur une plaque support 17, articulée en rotation autour du point 18 relié à une plaque fixe 19. Le contre-rouleau 15 peut donc décrire la trajectoire du cercle 20 passant par l'axe de symétrie du mandrin. Ce mouvement est commandé à la plaque support 17 par un vérin hydraulique rotatif 21. Pour cela un point A de la plaque 17 est relié par une bielle 22 à une extrémité D d'un arbre 23 en rotation autour du point E. Ce mouvement de rotation de l'arbre 23 est lui-même transmis par l'arbre 24, mobile autour du point E et solidaire de l'arbre 23, l'extrémité F de l'arbre 24 étant mue par l'avance ou le recul du vérin articulé 21, en rotation libre autour du point G, de telle sorte qu'un déploiement de la tige 25 entraîne un déplacement dans le sens trigonométrique du contre-rouleau 15. La longueur de la tige 25 est telle qu'en bout de course, le contre-rouleau 15, placé en C est au contact du plus petit mandrin susceptible d'être utilisé. En pratique les mandrins employés n'ont pas un diamètre inférieur à 12 mm.

Pour plus de clarté, nous n'avons évoqué jusqu'à présent que le cas du premier contre-rouleau 15. Les contre-rouleaux 15', 15" sont montés d'une même façon sur une plaque support 17', 17", articulée autour du point 18', 18" qui repose sur une plaque fixée sur la bâti 19', 19". Le mouvement de rotation de la plaque 19', 19" est commandé solidairement de celui de la plaque 19 par un bras articulé 26' ou respectivement 26".

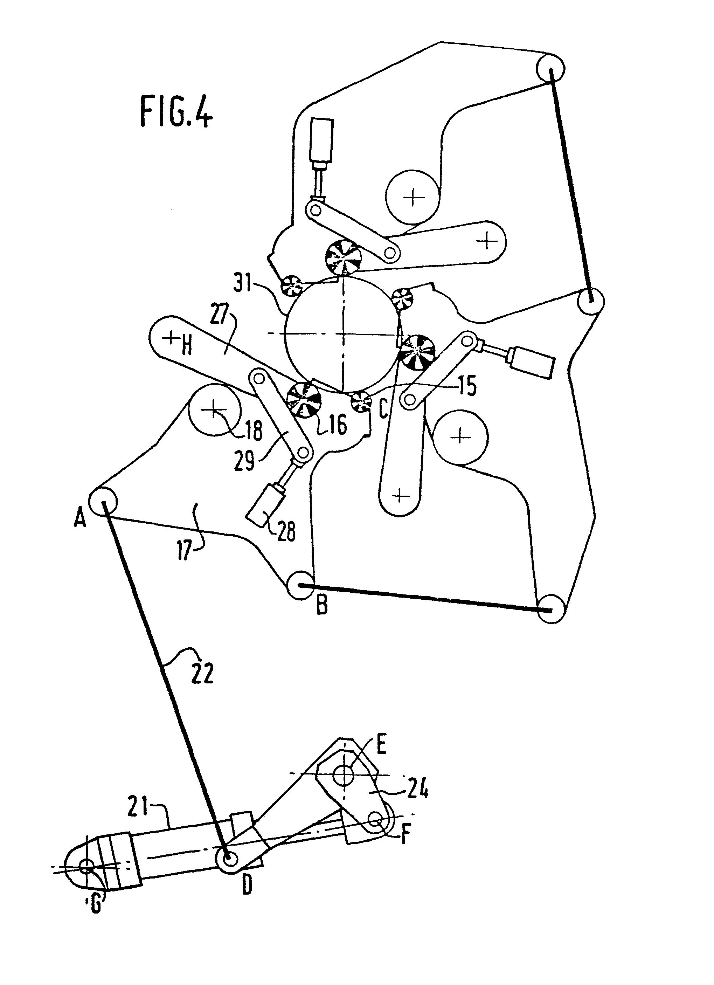

Sur les figures 2, 3, 4, chaque contre-rouleau auxiliaire 16, 16', 16" est relié d'une part respectivement à un point fixe H lié à la plaque 19, 19', 19" autour duquel le bras 27, 27', 27" porteur du contre-rouleau 16, 16', 16" est en rotation libre. Ce mouvement de rotation est commandé par un vérin hydraulique 28, 28', 28" fixé rigidement sur la plaque support 17 et qui par l'intermédiaire de son bras 29 transmet à l'arbre 27 le mouvement de rotation de la plaque support 17. Il faut noter que le vérin hydraulique 28 doit être tel que lorsque sa tige 30 est déployée, la génératrice des contre-rouleaux auxiliaires 16, 16', 16" la plus proche de l'axe du mandrin soient situées sur un cylindre 31 tangentant également les génératrices des contre-rouleaux primaires 15, 15', 15", ce cylindre 31 représentant l'enveloppe extérieure de la coquille en formation, et montré plus spécialement à la figure 4.

A l'extrémité des contre-rouleaux non représentée sur les figures sont placées des flasques, montées sur pivot et solidaires des mouvements rotatifs des plaques support 17, 17' et 17". Ces flasques portent des vérins identiques aux vérins 28, 28' et 28" et travaillent en parfaite synchronisation avec ceux-ci, ce qui permet d'éclipser les contre-rouleaux auxiliaires 16, 16' et 16". Ces flasques supportent également des moteurs hydrauliques entraînant en rotation les contre-rouleaux.

Le fonctionnement de l'enrouleuse selon l'invention peut se décomposer ainsi. Initialement, les contre-rouleaux principaux sont rapprochés de telle sorte que l'espace central laissé libre entre eux soit juste suffisant pour permettre le passage des deux demi-mandrins. Les contre-rouleaux principaux assurent ainsi une fonction de guidage des demi-mandrins, particulièrement importante dans le cas des coquilles de petit diamètre intérieur, car alors il se produit un effet de flèche non négligeable, les demi-mandrins n'étant maintenus que par une de leur extrémité. Notons que le diamètre des demi-mandrins sera de préférence inférieur de 0,5 mm au diamètre intérieur de la coquille conformée. Ainsi, dès la première spire de feutre de fibres minérales enroulée autour du mandrin, les contre-rouleaux 15, 15', 15" sont au contact de la coquille en formation. Au fur et à mesure que le feutre s'enroule, le diamètre extérieur de la coquille s'accroît et les contre-rouleaux 15, 15', 15" s'écartent de l'axe du mandrin leur mouvement étant commandé par le recul progressif de la tige 25 du vérin 21. Lorsque le diamètre extérieur de la coquille atteint par exemple 200 mm, les contre-rouleaux auxiliaires jusqu'alors éclipsés viennent en position de travail, c'est à dire que les tiges 30, 30', 30" des vérins 28, 28', 28" sont déployées totalement ce qui amènent les contre-rouleaux auxiliaires 16, 16', 16" au contact de la coquille. Les mouvements des contre-rouleaux 16, 16', 16" sont alors commandés par ceux de la plaque support 17, 17', 17" de sorte qu'ils exercent une pression identique à celle des contre-rouleaux principaux 15, 15', 15".

De préférence et comme représenté sur les figures 2 à 4, les contre-rouleaux auxiliaires 16, 16', 16" ont un diamètre supérieur à celui des contre-rouleaux principaux. En effet, pour assurer une compression la mieux répartie possible sur la surface extérieure de la coquille, il est important d'avoir une surface de contact importante. Or il est clair que pour pouvoir approcher les contre-rouleaux principaux dès le début de la phase d'enroulement, il n'est pas possible de disposer de contre-rouleaux d'un diamètre supérieur à

$$d = \frac{\sqrt{3}\, d_m}{2 - \sqrt{3}}$$ où $d_m$ est le diamètre du mandrin.

Dans une installation polyvalente telle qu'envisagée de préférence selon l'invention, les contre-rouleaux doivent pouvoir exercer une compression suffisante pour tous les types de coquilles dont on désire la conformation par l'installation, y compris pour des coquilles d'un diamètre intérieur de l'ordre de 12 mm ce qui signifie que les contre-rouleaux principaux ne peuvent pas avoir un diamètre supérieur à 77,6 mm. Le diamètre maximum des contre-rouleaux auxiliaires est bien entendu également limité par le diamètre de la coquille. Toutefois le calcul montre que si selon une forme de réalisation de l'invention, les contre-rouleaux auxiliaires ne sont mis au contact de la coquille que lorsque celle-ci atteint 200 mm de diamètre, avec des contre-rouleaux principaux de 77,6 mm de diamètre, le diamètre maximum théorique des contre-rouleaux auxiliaires est supérieur à 700 mm. Pour des raisons de réalisations pratiques et encore que celà théoriquement ne corresponde pas aux conditions les plus favorables à une bonne conformation des coquilles, on emploie en fait des contre-rouleaux auxiliaires de dimensions bien inférieures par exemple d'un diamètre égal à 80 mm.

Venons-en maintenant plus spécialement aux difficultés posées par l'enroulement proprement dit autour d'un mandrin tournant chauffé, d'un tronçon de feutre de fibres minérales dont la longueur peut atteindre plus d'une vingtaine de mètres, dans le but de conformer une coquille isolante de diamètre extérieur pouvant atteindre jusqu'à 500 mm.

Comme déjà mentionné, opérer un tel enroulement suivant une vitesse d'alimentation en feutre de fibres minérales croissante avec un mandrin chauffé tournant à vitesse constante conduit à des temps d'enroulement très importants dès que le diamètre extérieur de la coquille conformée dépasse par exemple 200 mm. Aussi selon l'invention, on choisit d'opérer avec une vitesse d'alimentation en feutre constante et donc avec une vitesse de rotation du mandrin décroissant au fur et à mesure de l'enroulement.

Théoriquement, cette vitesse de rotation du mandrin chauffé doit être égale à chaque instant t à : Vr = Va/πd où Vr est la vitesse de rotation du mandrin en tours/minute, Va la vitesse d'alimentation en feutre en mètres/minute et d le diamètre extérieur de la coquille en mètre à l'instant t. Si d'autre part, on considère que globalement, toutes les spires de feutre enroulées créent un accroissement identique de l'épaisseur de la coquille ou en d'autres termes que toutes les spires sont comprimées d'une manière identique, on calcule la valeur de d de la manière suivante

$$d = \sqrt{\frac{t}{t_e}(d_e^2 - d_m^2) + d_m^2}$$

est le temps nécessaire à l'enroulement total d'une coquille, $d_e$ le diamètre extérieur final de la coquille conformée et $d_m$ le diamètre du mandrin autour duquel le feutre est enroulé.

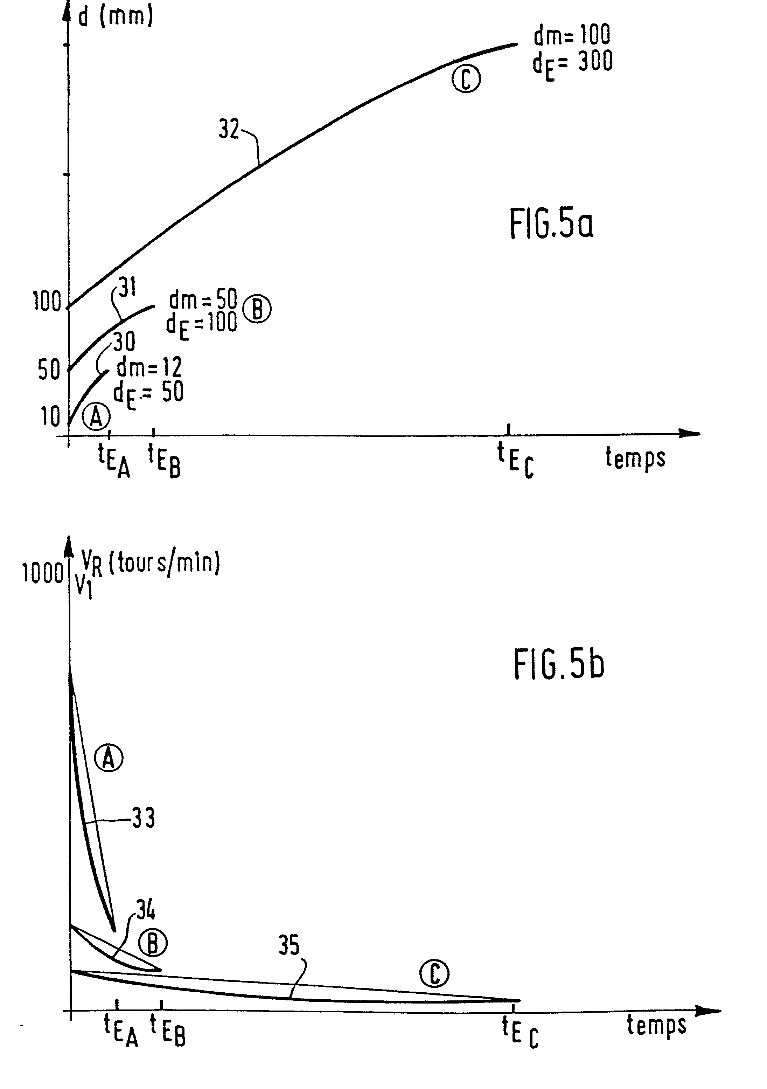

La figure 5 illustre l'évolution au cours du temps de l'enroulement du diamètre extérieur de la coquille (figure 5a) et de la vitesse correspondante de rotation du mandrin (figure 5b). La courbe 30 correspond par exemple à l'enroulement, avec une vitesse d'alimentation constante Va = 30 m.s$^{-1}$ pendant un temps $t_{eA}$ d'une coquille A d'un diamètre intérieur fictif de $d_m$ = 12 mm et d'un diamètre extérieur $d_e$ = 50 mm. Les courbes 31 et 32 correspondent elles respectivement à l'enroulement pendant un temps $t_{eB}$ ou $t_{ec}$ d'une coquille B ou C, avec $d_m$ = 50 mm, $d_e$ = 100 mm ou $d_m$ = 100 mm, $d_e$ = 300 mm.

On constate que de fait, dans l'intervalle d'épaisseur et de diamètre extérieur des coquilles selon l'invention, la courbe représentative du diamètre est pratiquement une droite.

A partir de cette valeur instantanée du diamètre d, on en déduit que l'expression théorique de la vitesse du mandrin est égale à

$$Vr = Va/\pi . \sqrt{\frac{t}{t_e}(d_e^2 - d_m^2) + d_m^2}$$

Ainsi pour chaque type de coquille, la seule variable dans cette expression est le temps. On a représenté en 33, 34, 35 l'allure de la courbe représentative de cette vitesse de rotation du mandrin $V_R$ en fonction du temps, respectivement pour les coquilles A, B et C. On constate tout d'abord que la production de coquilles de petits diamètres intérieurs demande à ce que le mandrin puisse être entraîné jusqu'à une vitesse de rotation proche de 800 tours/minute. Par contre, en fin d'enroulement d'une coquille de 500 mm de diamètre extérieur, la vitesse de rotation est inférieure à 20 tours/minute pour une vitesse d'alimentation en feutre maintenue constante à 30 mètres/minute. De telles variations de vitesse de rotation rendent délicate une corrélation parfaite entre la vitesse de rotation du mandrin et la vitesse théorique instantanée.

Selon l'invention, on veille à ce que la vitesse réelle de rotation du mandrin soit égale à la vitesse de rotation théorique $V_R$ précédemment calculée en début et en fin d'enroulement. Ainsi d'une part en début d'enroulement on favorise un bon accrochage des premières spires sur le mandrin et d'autre part, en fin d'enroulement on évite la formation de plis ou de vagues inesthétiques. Entre ces deux valeurs de référence, la vitesse décroît linéairement. Ce choix est rendu possible par l'élasticité du matériau qui autorise un certain étirement de celui-ci. De plus comme déjà mentionné, l'accroissement éventuel de la densité de la coquille conformée n'a pratiquement pas d'influence sur la conductivité pour des coquilles isolantes formées de fibres de verre.

Pour ce qui concerne les contre-rouleaux, nous avons déjà indiqué qu'ils s'écartent de l'axe du mandrin au fur et à mesure de l'augmentation du diamètre de la coquille en formation, en exerçant pendant toute la durée de l'enroulement une légère pression sur celle-ci. La pression exercée par les contre-rouleaux doit être telle que le diamètre extérieur de la coquille soit bien conforme au diamètre souhaité. Pour favoriser l'accrochage des premières spires, les contre-rouleaux sont de préférence animés d'une vitesse de rotation périphérique égale à la vitesse d'alimentation en feutre de fibres minérales.

Comme un feutre de fibres minérales est un produit très compressible, on observe une certaine reprise d'épaisseur en fin d'enroulement. D'autre part, plus l'épaisseur de feutre enroulé augmente, plus la coquille en formation est molle et donc plus elle se comporte comme un matériau élastique. Il est donc d'autant plus difficile de contrôler la valeur du diamètre extérieur de la coquille en fin d'enroulement, que celle-ci présente une épaisseur de feutre enroulé importante.

Si le feutre de fibres minérales se comportait comme un matériau parfaitement inélastique, on calculerait aisément qu'à chaque instant t, la vitesse d'écartement v des contre-rouleaux devrait être égale à $v = (d_e^2 - d_m^2)/4\,t_e d$ où $d$, $d_e$, $d_m$ représentant le diamètre extérieur de la coquille respectivement à l'instant t, en fin d'enroulement et au début d'enroulement et $t_e$ le temps nécessaire à l'enroulement de la coquille. La courbe 36 représente cette vitesse d'écartement v en fonction du temps pour les coquilles du type B et C précédemment décrit.

Selon l'invention, on choisit de fixer la vitesse réelle $v_e$ d'écartement des contre-rouleaux en fin d'enroulement comme étant égale à la vitesse v calculée à l'instant $t_e$. De plus, on impose une variation linéaire de la vitesse d'écartement, la pente x étant obtenue après linéarisation de la courbe $v = f(t)$ soit

$$\alpha = (d_e - d_m)/t_e^2 - 2\frac{v_e}{t_e}.$$ La courbe 37 représente la droite ainsi obtenue. On constate que, en début d'enroulement, la vitesse d'écartement des contre-rouleaux est inférieure à la vitesse théorique ce qui permet d'exercer une surcompression qui favorise la formation d'une surface interne durcie. Il est aussi possible d'augmenter cette surcompression en différant l'écartement des contre-rouleaux par rapport au début de l'enroulement, comme représenté à la figure 6, les contre-rouleaux ayant une vitesse d'écartement nulle de l'instant $t = o$ à $t = t'$.

Cette mesure est plus particulièrement importante pour des coquilles d'une assez grande épaisseur, de l'ordre de 100 mm par exemple, car alors la reprise d'épaisseur de la coquille devient très importante dès que la compression est arrêtée. Pour en tenir compte, on propose selon l'invention d'afficher un diamètre extérieur théorique inférieur au diamètre réel mais qui serait obtenu après le même temps d'enroulement. Selon l'invention, il a été trouvé que dans le cas de coquilles d'épaisseur inférieure à 150 mm et de diamètre extérieur n'excédant pas 500 mm des résultats très satisfaisants étaient obtenus avec un diamètre théorique égal à 88 % du diamètre extérieur que l'on cherche à obtenir après conformation. Dans ce cas la vitesse d'écartement des contre-rouleaux en fin d'enroulement est imposée

égale à $v' = \dfrac{d_e \times 0,881^2 - d_m^2}{4\,t_e\,d_e}$ et la pente $\alpha'$

égale à: $\alpha = (d_e \times 0,88 - d_m)/t_e^2 - 2\dfrac{v}{v}$ On a ainsi $v' < v$, ce qui signifie une légère surcompression en fin d'enroulement mais aussi $\alpha' > \alpha$ soit une compression plus faible en début d'enroulement compensée par le retard de l'écartement des contre-rouleaux.

Un tel asservissement procure d'excellent résultat c'est à dire une très bonne conformité entre la valeur mesurée du diamètre extérieur de la coquille conformée et la valeur recherchée, ceci bien entendu pour des diamètres extérieurs inférieurs selon l'invention à 500 mm, et des épaisseurs inférieures à 150 mm.

Il va de soi que si des coquilles d'épaisseurs supérieures devaient être conformées avec un dispositif du type décrit dans l'invention, ce qui n'est toutefois pas préféré, il serait alors nécessaire de choisir une valeur théorique du diamètre extérieur plus faible qui sera déterminée après essais.

## Revendications

1. Procédé de fabrication de coquilles isolantes formées de fibres minérales agglomérées par un liant selon lequel on enroule un feutre de fibres minérales imprégné d'un liant à l'état non polymérisé, autour d'un mandrin tournant chauffé dont la température est telle qu'une surface interne durcie se forme à son contact pendant l'enroulement, la polymérisation du liant étant de plus amorcée au voisinage de cette surface interne et selon lequel on exerce une certaine pression sur la coquille en formation au moyen d'organes de pressage constitués par des contre-rouleaux principaux qui restent au contact de la surface externe de la coquille pendant toute la phase d'enroulement, la coquille étant ensuite mise en contact sous légère compression avec une surface lisse chauffée pour amorcer la polymérisation au voisinage de la surface extérieure, la coquille formée étant ensuite amenée dans une enceinte chauffée pour assurer une polymérisation uniforme d'un degré déterminé dans toute l'épaisseur de ladite coquille, *caractérisé en ce que* lorsque le diamètre extérieur de la coquille en cours de conformation atteint une valeur donnée, on amène au contact de la surface externe de la coquille des organes de pressage auxiliaires constitués par des contre-rouleaux s'écartant de l'axe du mandrin avec la même vitesse instantanée d'écartement que celle des contre-rouleaux principaux, la pression exercée par les contre-rouleaux principaux et éventuellement auxiliaires étant augmentée au fur et à mesure de la progression de l'enroulement.

2. Procédé selon la revendication 1, *caractérisé en ce que* l'enroulement du feutre est effectué à vitesse tangentielle sensiblement constante.

3. Procédé selon la revendication 2, *caractérisé en ce que* l'on fait décroître linéairement la vitesse de rotation du mandrin chauffé d'une manière telle que la vitesse de rotation du mandrin en début d'enroulement soit égale à $V_1 = V_a/\pi \, d_m$ et que la vitesse de rotation $V_2$ en fin d'enroulement soit égale à : $V_2 = V_a/\pi \, d_e$ où $V_A$ représente la vitesse d'alimentation en feutre $d_m$ le diamètre du mandrin et $d_e$ le diamètre extérieur de la coquille en fin d'enroulement.

4. Procédé selon la revendication 2, *caractérisé en ce que* l'augmentation de la pression exercée par les contre-rouleaux est obtenue par une décroissance à deccélération constante de la vitesse d'écartement des contre-rouleaux.

5. Procédé selon la revendication 3, *caractérisé en ce que* la vitesse d'écartement v des contre-rouleaux est telle qu'à l'instant t = t v = v où

$$v_e = \frac{d^2_e - d^2_m}{4 \, t_e \, d_e}$$

et que v décrive en fonction du temps une droite de pente α

$$\alpha = \frac{d_e - d_m}{t^2_e} - 2 \, \frac{v_e}{t_e}$$

où $d_m$ est le diamètre du mandrin, $d_e$ le diamètre extérieur de la coquille en fin d'enroulement et $t_e$ le temps d'enroulement.

6. Procédé selon la revendication 3, *caractérisé en ce que* la vitesse d'écartement v' des contre-rouleaux est telle qu'à l'instant t = t_e v' = v_e' où

$$v_e' = \frac{(d_e \cdot 0{,}88)^2 - d_m}{4 \, t_e \, d_e}$$

et que v' décrive en fonction du temps une droite de pente

$$\alpha' = \frac{d_e - d_m}{t^2_e} - 2 \, \frac{v_e'}{t_e}$$

où $d_m$ est le diamètre du mandrin, $d_e$ le diamètre extérieur de la coquille en fin d'enroulement et $t_e$ le temps d'enroulement.

7. Dispositif pour la mise en oeuvre du procédé selon une des revendications précédentes, comportant un bâti supportant un mandrin tournant formé de deux semi-mandrins entraînés solidairement en rotation, munis de résistances électriques et des contre-rouleaux (15, 15', 15", 16, 16', 16") restant en contact avec la coquille en cours de conformation, munis chacun d'un dispositif d'entraînement en rotation et d'un dispositif assurant un mouvement de ces contre-rouleaux par rapport à l'axe du mandrin, *caractérisé en ce qu'un* contre-rouleau sur deux ou contre-rouleau auxiliaire est doté d'un dispositif permettant de ne le faire venir au contact de la coquille en cours de formation que lorsque le diamètre extérieur de celle-ci atteint une valeur donnée.

8. Dispositif selon la revendication 7, *caractérisé en ce que* le dispositif assurant les mouvements d'écartement ou de rapprochement par rapport à l'axe du mandrin des contre-rouleaux principaux et auxiliaires (15, 15', 15", 16, 16', 16") comporte un vérin hydraulique articulé (21), et de moyens de transmission de ces mouvements (22, 23, 24, 25).

9. Dispositif selon la revendication 7 ou 8, *caractérisé en ce que* le dispositif permettant d'éclipser un contre-rouleau auxiliaire est formé par un vérin hydraulique (28, 28', 28") fixé rigidement sur une plaque support (17, 17', 17") sur laquelle est montée un contre-rouleau principal intervenant quelque soit le diamètre extérieur de la coquille.

## 15

10. Dispositif selon une des revendications 7 à 9, *caractérisé* en ce que les contre-rouleaux principaux et auxiliaires sont munis chacun d'un moteur hydraulique les entraînant en rotation.

11. Dispositif selon une des revendications 9 à 10, *caractérisé* en ce que les contre-rouleaux auxiliaires ont un diamètre supérieur à celui des contre-rouleaux principaux.

**Patentansprüche**

1. Verfahren zur Herstellung von isolierenden Schalenkörpern, die aus mit einem Bindemittel versehenen Mineralfasern gebildet werden, bei dem ein mit einem Bindemittel in nicht polymerisiertem Zustand imprägnierter Filz aus Mineralfasern um eine erwärmte Drehspindel gewickelt wird, deren Temperatur derart eingestellt ist, daß sich beim Kontakt während des Wickelvorganges eine gehärtete innere Oberfläche bildet, wobei die Polymerisation des Bindemittels in der Umgebung dieser inneren Oberfläche verstärkt einsetzt, und bei dem auf den entstehenden Schalenkörper ein bestimmter Druck mit Hilfe von Preßeinrichtungen ausgeübt wird, die aus Gegendruckhauptwalzen bestehen, die mit der äußeren Oberfläche des Schalenkörpers während der gesamten Wickelphase in Kontakt bleiben, wobei der Schalenkörper dann unter leichtem Zusammendrücken mit einer erwärmten glatten Oberfläche in Kontakt gebracht wird, um die Polymerisation in der Umgebung der äußeren Oberfläche einzuleiten, und der gebildete Schalenkörper dann in einen erwärmten Behälter weiterbefördert wird, um eine gleichmäßige Polymerisation mit einem bestimmten Polymerisationsgrad über die ganze Dicke des Schalenkörpers zu gewährleisten, *dadurch gekennzeichnet*, daß man die äußere Oberfläche des Schalenkörpers mit zusätzlichen Preßeinrichtungen in Kontakt bringt, wenn der äußere Durchmesser des Schalenkörpers im Verlaufe der Formgebung einen vorgegebenen Wert erreicht, wobei die zusätzlichen Preßeinrichtungen aus Gegendruckwalzen bestehen, die sich von der Achse der Drehspindel mit der jeweils gleichen Momentangeschwindigkeit wie die Gegendruckhauptwalzen entfernen, und der von den Gegendruckhauptwalzen und gegebenenfalls Gegendruckhilfswalzen ausgeübte Druck in dem Maße erhöht wird, wie die Wickelung fortschreitet.

2. Verfahren nach Anspruch 1, *dadurch gekennzeichnet*, daß die Wickelung des Filzes mit im wesentlichen gleichbleibender Tangentialgeschwindigkeit erfolgt.

3. Verfahren nach Anspruch 2, *dadurch gekennzeichnet*, daß man die Rotationsgeschwindigkeit der erwärmten Drehspindel linear dergestalt verringert, daß die Rotationsgeschwindigkeit der Drehspindel bei Beginn des Wickelvorganges gleich $V_1 = V_a/\pi \, d_m$ beträgt und daß die Rota-

## 16

tionsgeschwindigkeit $V_2$ bei Ende des Wickelvorganges gleich $V_2 = V_a/\pi \, d_e$ beträgt, wobei $V_A$ die Geschwindigkeit darstellt, mit der der Filz zugeführt wird, $d_m$ den Durchmesser der Drehspindel und $d_e$ den äußeren Durchmesser des Schalenkörpers bei Ende des Wickelvorganges darstellt.

4. Verfahren nach Anspruch 2, *dadurch gekennzeichnet*, daß die Zunahme des von den Gegendruckwalzen ausgeübten Drucks durch eine Verringerung der Entfernungsgeschwindigkeit der Gegendruckwalzen mit gleichbleibender Verzögerung erzielt wird.

5. Verfahren nach Anspruch 3, *dadurch gekennzeichnet*, daß die Entfernungsgeschwindigkeit v der Gegendruckwalzen so gewählt ist, daß zum Zeitpunkt $t = t_e$ $v = v_e$ ist, wobei

$$v_e = \frac{d_e^2 - d_m^2}{4 \, t_e \, d_e}$$

und daß v in Abhängigkeit von der Zeit eine Gerade mit einem Gefälle $\alpha$ beschreibt

$$\alpha = \frac{d_e - d_m}{t_e^2} - 2 \frac{v_e}{t_e}$$

wobei $d_m$ der Durchmessers der Drehspindel, $d_e$ der äußere Durchmesser des Schalenkörpers bei Ende der Wicklung und $t_e$ die Wickelzeit ist.

6. Verfahren nach Anspruch 3, *dadurch gekennzeichnet*, daß die Entfernungsgeschwindigkeit v' der Gegendruckwalzen so gewählt ist, daß zum Zeitpunkt $t = t_e$ $v' = v_e'$ ist, wobei

$$v_e' = \frac{(d_e \cdot 0,88)^2 - d_m}{4 \, t_e \, d_e}$$

und daß v' in Abhängigkeit von der Zeit eine Gerade mit dem Gefälle

$$\alpha' = \frac{d_e - d_m}{t_e^2} - 2 \frac{v_e'}{t_e}$$

beschreibt, wobei $d_m$ der Durchmesser der Drehspindel, $d_e$ der äußere Durchmesser des Schalenkörpers bei Ende der Wicklung und $t_e$ die Wickelzeit ist.

7. Vorrichtung zur Durchführung des Verfahrens nach einem der vorhergehenden Ansprüche, mit einem Rahmen, der eine Drehspindel trägt, die aus zwei Halbspindeln gebildet ist, die miteinander verbunden in Rotation versetzt werden, mit elektrischen Widerständen und mit Gegendruckwalzen (15, 15', 15", 16, 16', 16"), die während der Formgebung mit dem Schalenkörper in Kontakt bleiben, mit jeweils einer Drehantriebsvorrichtung und einer Vorrichtung zur Gewährleistung einer Bewegung dieser Gegendruckwalzen in Bezug auf die Achse der Spindel, *dadurch gekennzeichnet*, daß jede zweite Gegendruckwalze oder Gegendruckhilfswalze eine Vorrichtung aufweist, durch die die Gegendruckwalzen oder Gegendruckhilfswalzen im Verlaufe der Formgebung erst dann in Kontakt mit dem Schalenkörper kommen, wenn sein äußerer Durchmesser einen vorgegebenen Wert erreicht.

8. Vorrichtung nach Anspruch 7, *dadurch gekennzeichnet*, daß die Vorrichtung, die die Entfernungs- oder Annäherungsbewegungen der Gegendruckhauptwalzen oder Gegendruckhilfwalzen (15, 15', 15", 16, 16', 16") in Bezug auf die Achse der Drehspindel gewährleistet, einen angelenkten hydraulischen Zylinder (21) sowie Einrichtungen zur Übertragung dieser Bewegungen (22, 23, 24, 25) aufweist.

9. Vorrichtung nach Anspruch 7, *dadurch gekennzeichnet*, daß die Vorrichtung, mit der eine Gegendruckhilfswalze einfahrbar ist, von einem Hydraulikzylinder (28, 28', 28") gebildet wird, der fest auf einer Trägerplatte (17, 17', 17") angeordnet ist, auf der eine Gegendruckhauptwalze montiert ist, die bei einem beliebigen äußeren Durchmesser des Schalenkörpers in Aktion tritt.

10. Vorrichtung nach einem der Ansprüche 7 bis 9, *dadurch gekennzeichnet*, daß die Gegendruckhauptwalzen und Gegendruckhilfswalzen jeweils mit einem hydraulischen Motor ausgestattet sind, der sie in Drehbewegung versetzt.

11. Vorrichtung nach einem der Ansprüche 7 bis 9, *dadurch gekennzeichnet*, daß die Gegendruckhilfswalzen einen Durchmesser aufweisen, der größer als derjenige der Gegendruckhauptwalzen ist.

**Claims**

1. Process for production of insulating shells or casings, formed from mineral fibres agglomerated by a binder, according to which a felt of mineral fibres impregnated with a binder in the non-polymerized state is wound around a heated rotary mandrel, whose temperature is such that a hardened internal surface forms on contact therewith during winding, polymerization of the binder being initiated in the vicinity of said internal surface and according to which a certain pressure is exerted on the forming casing by means of pressing members constituted by main counter-rollers remaining in contact with the external surface of the casing throughout the winding phase, the casing then being brought into contact under slight compression with a smooth heated surface in order to initiate polymerization in the vicinity of the external surface, the casing formed then being brought into a heated enclosure to ensure a uniform polymerization by a given extent in the entire thickness of said casing, *characterized* in that when the external diameter of the casing during shaping reaches a given value, auxiliary pressing members constituted by counter-rollers are brought into contact with the external surface of the casing and are separated from the axis of the mandrel at the same instantaneous separating speed as that of the main counter-rollers, the pressure exerted by the main and possibly the auxiliary counter-rollers being increased as winding progresses.

2. Process according to claim 1, *characterized* in that the winding of the felt takes place at a substantially constant tangential speed.

3. Process according to claim 2, *characterized* in that a linear decrease takes place to the rotation speed of the heated mandrel, in such a way that the mandrel rotation speed at the start of winding is equal to $V_1 = V_a/\pi\, d_m$ and that the rotation speed $V_2$ at the end of winding is $= $ to $V_2 = V_a/\pi\, d_e$, in which $V_A$ represents the felt supply speed, $d_m$ the mandrel diameter and $d_e$ the external diameter of the casing at the end of winding.

4. Process according to claim 2, *characterized* in that the increase of the pressure exerted by the counter-rollers is obtained by a decrease with a constant deceleration of the separating speed of the counter-rollers.

5. Process according to claim 3, *characterized* in that the separating speed $v$ of the counter-rollers is such that at time $t = t_e$ $v = v_e$ where

$$v_e = \frac{d^2_e - d^2_m}{4\, t_e\, d_e}$$

and $v$ describes as a function of time a slope line $\alpha$

$$\alpha = \frac{d_e - d_m}{t^2_e} - 2\,\frac{v_e}{t_e}$$

in which $d_m$ is the diameter of the mandrel, $d_e$ the external diameter of the casing at the end of winding and $t_e$ the winding time.

6. Process according to claim 3, *characterized* in that the separating speed $v'$ of the counter-rollers is such that at time $t = t_e$ $v' = v_e'$ where

$$v_e' = \frac{(d_e{*}0.88)^2 - d_m}{4\, t_e\, d_e}$$

and $v'$ describes as a function of time a slope line

$$\alpha' = \frac{d_e - d_m}{t^2_e} - 2\,\frac{v_e'}{t_e}$$

in which $d_m$ is the diameter of the mandrel, $d_e$ the

external diameter of the casing at the end of winding and $t_e$ the winding time.

7. Apparatus for performing the process according to one of the preceding claims, comprising a frame supporting a rotary mandrel formed by two half-mandrels driven integrally in rotation, equipped with electrical resistors and counter-rollers (15, 15', 15", 16, 16', 16") remaining in contact with the casing during shaping and each provided with a rotating device and a device ensuring a movement of said counter-rollers with respect to the axis of the mandrel, *characterized* in that every alternate counter-roller or auxiliary counter-roller has a device such that it is not brought into contact with the casing being formed except when the external diameter thereof reaches a given value.

8. Apparatus according to claim 7, *characterized* in that the device ensuring the separating or moving together movements with respect to the axis of the mandrel of the main and auxiliary counter-rollers (15, 15', 15", 16, 16', 16") has an articulated hydraulic jack (21) and means for transmitting these movements (22, 23, 24, 25).

9. Apparatus according to claim 7 or 8, *characterized* in that the device making it possible to obscure an auxiliary counter-roller is formed by a hydraulic jack (28, 28', 28") rigidly fixed to a support plate (17, 17', 17"), on which is mounted a main counter-roller intervening no matter what the external diameter of the casing.

10. Apparatus according to one of the claims 7 to 9, *characterized* in that each of the main and auxiliary counter-rollers are provided with a hydraulic motor rotating the same.

11. Apparatus according to one of the claims 9 and 10, *characterized* in that the auxiliary counter-rollers have a diameter greater than that of the main counter-rollers.

# FIG.1

# FIG.6

VITESSE D'ECARTEMENT DES CONTRE ROULEAUX (m.s$^{-1}$)

FIG.2

# FIG.3

# FIG.4

FIG.5a

FIG.5b